(19) Europäisches Patentamt
European Patent Office
Office européen des brevets

(11) **EP 4 428 804 A1**

(12) **EUROPEAN PATENT APPLICATION**
published in accordance with Art. 153(4) EPC

(43) Date of publication:
**11.09.2024   Bulletin 2024/37**

(21) Application number: **22888622.2**

(22) Date of filing: **07.09.2022**

(51) International Patent Classification (IPC):
**G06T 3/00** *(2024.01)*          **G06T 7/00** *(2017.01)*
**G06V 10/774** *(2022.01)*

(52) Cooperative Patent Classification (CPC):
**G06T 3/00; G06T 7/00; G06V 10/774**

(86) International application number:
**PCT/JP2022/033508**

(87) International publication number:
**WO 2023/079828 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2021   JP 2021179256**

(71) Applicant: FUJIFILM Corporation
Tokyo 106-8620 (JP)

(72) Inventors:
• **NISHIO Yuya**
  **Saitama-shi, Saitama 331-9624 (JP)**
• **KOBAYASHI Toshiki**
  **Saitama-shi, Saitama 331-9624 (JP)**

(74) Representative: **Hughes, Andrea Michelle**
**Dehns Germany**
**Theresienstraße 6-8**
**80333 München (DE)**

(54) **PROCESSING METHOD, PROCESSING DEVICE, AND PROGRAM**

(57)    Provided are a processing method and a processing device for appropriately using processed image data in a case where an angle of view is changed for image data including accessory information related to a position of an object in the angle of view.

A processing method for processing image data including image information of an image with a first angle of view including an object and accessory information given to the image includes a conversion step of converting the image information of the image with the first angle of view into image information of an image with a second angle of view rotated from the first angle of view and an output step of outputting new position information related to a position of an object region in the second angle of view on the basis of information related to a rotation from the first angle of view to the second angle of view and position information related to the position of the object region in the first angle of view in a case where the conversion step has been executed.

FIG. 8

EP 4 428 804 A1

**Description**

**BACKGROUND OF THE INVENTION**

1. Field of the Invention

The present invention relates to an image processing method, a processing device, and a program.

2. Description of the Related Art

Image data of a captured image is used for various purposes. For example, in some cases, training data is created from the image data, and machine learning is performed using the training data. The image data used to create the training data generally includes information (image information) of an image with an angle of view including an object and a label (accessory information) indicating the type of the object, a region of the object in the angle of view, and the like (see, for example, JP2018-18384A).

**SUMMARY OF THE INVENTION**

In addition, in a case where the image data is used, the image may be processed, specifically, the angle of view may be changed by image conversion such as rotation and partial removal (trimming). In this case, it is necessary to appropriately acquire information related to the region of the object in the changed angle of view according to, for example, the degree of change of the angle of view. In particular, in a case where the image data is used to create the training data and the accessory information included in the image data after the change of the angle of view is not information in which the change of the angle of view has not been reflected, there is a concern that the image data will affect a learning result.

An object of an embodiment of the present invention is to provide a processing method and a processing device for appropriately using processed image data in a case where an angle of view is changed for image data including accessory information related to a position of an object in the angle of view.

In order to achieve the above object, according to an embodiment of the present invention, there is provided a processing method for processing image data including image information of an image with a first angle of view including an object and accessory information given to the image. The processing method comprises: a conversion step of converting the image information of the image with the first angle of view into image information of an image with a second angle of view rotated from the first angle of view; and an output step of outputting new position information related to a position of a region of the object in the second angle of view on the basis of information related to a rotation from the first angle of view to the second angle of view and position information related to the position of the region of the object in the first angle of view in a case where the conversion step has been executed.

In addition, the output step may be executed in a case where a rotation angle from the first angle of view to the second angle of view satisfies a predetermined condition.

Further, in the output step, in the second angle of view, a region after conversion that is larger than the region of the object in the first angle of view and that includes the region of the object may be set, and position information related to the region after conversion in the second angle of view may be output as the new position information.

Furthermore, the predetermined condition may be a condition in which the rotation angle is within a rotation range excluding 90°, 180°, and 270° in a rotation range that is greater than 0° and less than 360°.

Moreover, the processing method may further comprise a first addition step of adding the information related to the rotation from the first angle of view to the second angle of view to the accessory information of the image data including the image information of the image with the second angle of view in a case where the conversion step has been executed.

In addition, the conversion step may include a complementary step of complementing a portion other than a rotated image obtained by rotating the image with the first angle of view in the image with the second angle of view with a complementary image. Further, the processing method may further comprise a second addition step of adding information related to the complementary image to the accessory information of the image data including the image information of the image with the second angle of view in a case where the conversion step has been executed.

Furthermore, the image data may be used to create training data used for machine learning.

Moreover, according to another aspect of the present invention, there is provided a processing device for processing image data including image information of an image with a first angle of view including an object and accessory information given to the image. The processing device is configured to execute: a conversion step of converting the image information of the image with the first angle of view into image information of an image with a second angle of view rotated from the first angle of view; and an output step of outputting new position information related to a position of a region of the object in the second angle of view on the basis of information related to a rotation from the first angle of view to the second angle of view and position information related to the position of the region of the object in the first angle of view in a case where the conversion step has been executed.

In addition, according to still another embodiment of the present invention, there is provided a program causing a computer to execute the above-described processing method according to the embodiment of the present invention.

Further, according to yet another embodiment of the present invention, there is provided a processing method for processing image data including image information of an image with a first angle of view including an object and accessory information given to the image. The processing method comprises: a conversion step of converting the image information of the image with the first angle of view into image information of an image with a second angle of view narrower than the first angle of view; and an update step of updating the accessory information in a case where an object region including a target object that is the object in the first angle of view has been removed at a predetermined ratio or more in the second angle of view by the conversion step.

Furthermore, in the update step, a process of deleting information related to an attribute of the target object in the accessory information or a process of adding information related to a residual degree of the object region in the second angle of view to the accessory information may be executed.

Moreover, the information related to the residual degree of the object region in the second angle of view may include a residual ratio of the object region in the second angle of view to the object region in the first angle of view or the number of pixels constituting the object region in the second angle of view.

In addition, the information related to the residual degree of the object region in the second angle of view may be information that is referred to in a case where image data in which the residual degree satisfies a setting condition is selected from an image database in which a plurality of image data items are accumulated.

Further, the predetermined ratio may be set according to an attribute of the target obj ect.

Furthermore, in a case where the target object is a person, the predetermined ratio may differ depending on an orientation of a face of the person.

Moreover, the object region may be a region that is specified by coordinates of a plurality of points in the object region or a region that is specified by coordinates of a base point in the object region and a distance from the base point.

In addition, the processing method may further comprise a storage step of storing image data before conversion that includes the image information of the image with the first angle of view before the conversion and the accessory information related to a position of the second angle of view in the first angle of view in a case where the conversion step has been executed.

Further, according to still yet another embodiment of the present invention, there is provided a processing device for processing image data including image information of an image with a first angle of view including an object and accessory information given to the image. The processing device is configured to execute: a conversion step of converting the image information of the image with the first angle of view into image information of an image with a second angle of view narrower than the first angle of view; and an update step of updating the accessory information in a case where an object region including a target object that is the object in the first angle of view has been removed at a predetermined ratio or more in the second angle of view by the conversion step.

Furthermore, to yet still another embodiment of the present invention, there is provided a program causing a computer to execute the above-described processing method according to yet another embodiment of the present invention.

## BRIEF DESCRIPTION OF THE DRAWINGS

Fig. 1 is an explanatory diagram illustrating image data.
Fig. 2 is an explanatory diagram illustrating an angle of view.
Fig. 3 is an explanatory diagram illustrating position information of an object region having a circular shape.
Fig. 4 is an explanatory diagram illustrating a rotation process.
Fig. 5 is an explanatory diagram illustrating a removal process.
Fig. 6 is a diagram illustrating a configuration of a processing system including a processing device according to an embodiment of the present invention.
Fig. 7 is a diagram illustrating functions of the processing device according to the embodiment of the present invention.
Fig. 8 is a diagram illustrating image data before and after the rotation process.
Fig. 9 is a diagram illustrating the image data before and after the rotation process and information related to a position of a region after conversion.
Fig. 10 is a diagram illustrating the image data before and after the removal process.
Fig. 11 is an explanatory diagram illustrating a rotation processing flow.

Fig. 12 is an explanatory diagram illustrating a removal processing flow.

Fig. 13 is an explanatory diagram illustrating a removal process according to a second embodiment of the present invention and is a diagram illustrating image data before and after the removal process (Part 1).

Fig. 14 is an explanatory diagram illustrating the removal process according to the second embodiment of the present invention and is a diagram illustrating the image data before and after the removal process (Part 2).

## DESCRIPTION OF THE PREFERRED EMBODIMENTS

Hereinafter, specific embodiments of the present invention will be described. However, the embodiments described below are only examples for facilitating understanding of the present invention and do not limit the present invention. The present invention can be modified or improved from the embodiments described below without departing from the gist of the present invention. Furthermore, the present invention includes equivalents thereto.

In addition, in the present specification, the concept of "device" includes a single device that exerts a specific function and includes a combination of a plurality of devices that are distributed, are present independently of each other, and exert a specific function in cooperation (operative association) with each other.

Further, in the present specification, a "person" means an agent that performs a specific action, and the concept of the person includes an individual, a group, a corporation, such as a company, and an organization and can further include a computer and a device constituting artificial intelligence (AI). The artificial intelligence implements intellectual functions, such as inference, prediction, and determination, using hardware resources and software resources. Any artificial intelligence algorithm can be used, and examples thereof include an expert system, case-based reasoning (CBR), a Bayesian network, and a subsumption architecture.

<<For Outline of First Embodiment of Present Invention>>

A first embodiment of the present invention relates to a processing method, a processing device, and a program that process image data generated by a known imaging device such as a digital camera.

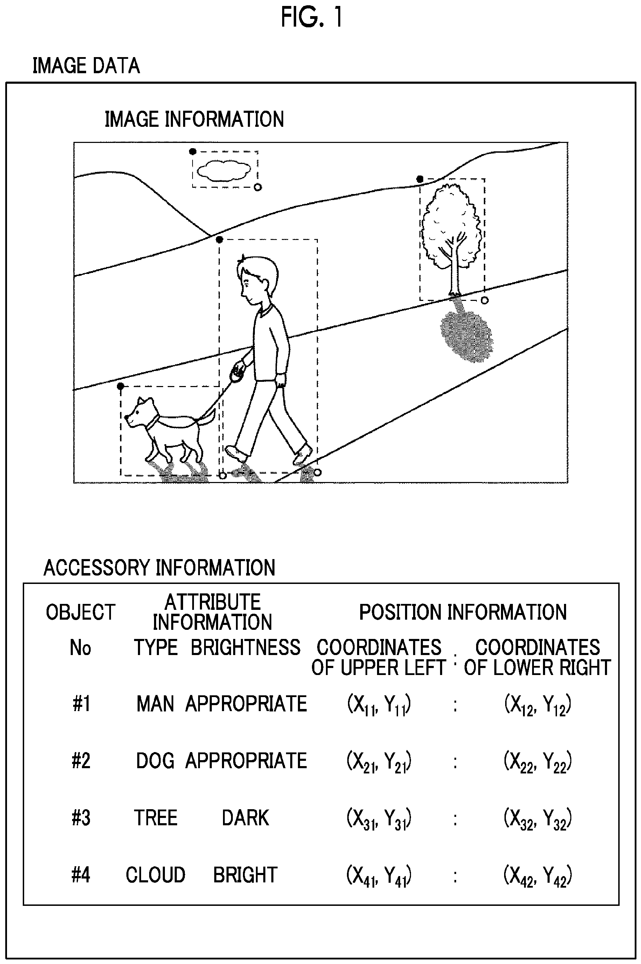

As illustrated in Fig. 1, the image data includes image information of a captured image and accessory information given to the image. The image is an image with an angle of view including one or more objects. The image information is information indicating, for example, resolution and gradation values of two colors of black and white or three colors of red, green, and blue (RGB) for each pixel.

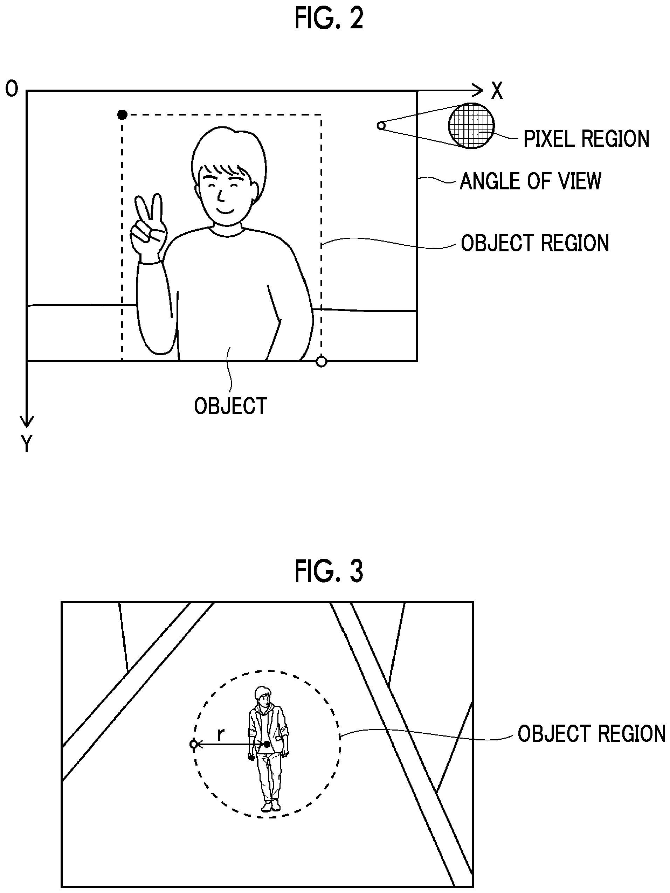

As illustrated in Fig. 2, the angle of view is a range in which an image is displayed or drawn in data processing and is defined, for example, in a two-dimensional coordinate space that has a rectangular shape and has two axes orthogonal to each other as coordinate axes. Further, the angle of view is divided into a plurality of pixel regions that are arranged along each of the two coordinate axes as illustrated in Fig. 2. In the present specification, the "pixel" is the minimum unit constituting the image, and the "pixel region" is a unit region corresponding to one pixel in the angle of view. Hereinafter, it is assumed that the number of pixel regions is referred to as "the number of pixels" for convenience.

The accessory information is tag information related to the image, the use of the image, and the like and includes tag information in a so-called exchangeable image file format (Exif) or the like. The accessory information includes at least attribute information related to attributes of the object in the image and position information related to the position of a region of the object (hereinafter, a referred to as an object region) in the angle of view.

As illustrated in Fig. 1, the attribute information includes information indicating a type (category) in a case where the object is classified on the basis of features or content of the object, such as a "female face" or a "Japanese building". In addition, the attribute information may include attributes, such as a state of the object, the presence or absence of blur or shake in the image, resolution, brightness, and a distance (depth) from the camera during imaging, other than the type.

As illustrated in Fig. 1, the position information is coordinate information indicating the position of the object region in the two-dimensional coordinate space that defines the angle of view. As illustrated in Figs. 1 and 2, the object region is a region that surrounds a portion or all of the object. Further, the shape of the object region is not particularly limited and may be, for example, a substantially circular shape or a rectangular shape. In addition, the "object" is an object to be imaged by the camera, is not limited to a specific tangible object, and also includes a non-tangible object such as a landscape or a pattern.

The object region is a region that is specified by the coordinates of a plurality of points in the object region, strictly speaking, a plurality of points on an edge of the object region. For example, in a case where the object region has a rectangular shape, the object region is specified by the coordinates of two points (points represented by a white circle and a black circle in Figs. 1 and 2) located at both ends of a diagonal line at the edge of the object region. In this case, the coordinates of the two specified points are the position information of the object region. In a case where the coordinates of a plurality of points in the object region are used as described above, it is possible to accurately represent the position of the object region.

In addition, the object region may be a region that is specified by the coordinates of a base point in the object region and a distance from the base point. For example, in a case where the object region has a circular shape, the object region is specified by the coordinates of the center (base point) of the object region and the distance (that is, a radius r) from the base point to the edge of the object region as illustrated in Fig. 3. In this case, the coordinates of the center, which is the base point, and the radius, which is the distance from the base point, are the position information of the object region. In a case where the base point in the object region and the distance from the base point are used as described above, it is possible to accurately represent the position of the object region. In addition, for example, in a case where the object region has a quadrangular shape, the object region may be specified by the coordinates of the center of the object region and the distance from the center in the direction of each coordinate axis (the vertical direction and the horizontal direction).

Further, in a case where a plurality of objects are present in the angle of view, the object region is specified for each object, the attribute information and the position information of the object region are generated for each object, and the attribute information and position information of each object are included in the accessory information.

The accessory information may be automatically given by the function (the function of giving the accessory information) of the imaging device in a case where the image has been captured by the imaging device. Alternatively, the accessory information may be given by the function of an image editing application installed in a user-side device 12 which will be described below.

The image data is used for various purposes. For example, the image data is used for the purpose of creating training data for machine learning. Specifically, the image data including the image information and the accessory information is collected at a predetermined collection destination and is then annotated (selected) according to a learning purpose. Training data is created from the selected image data. Then, in a case where training data required for machine learning is acquired, machine learning using the training data is performed.

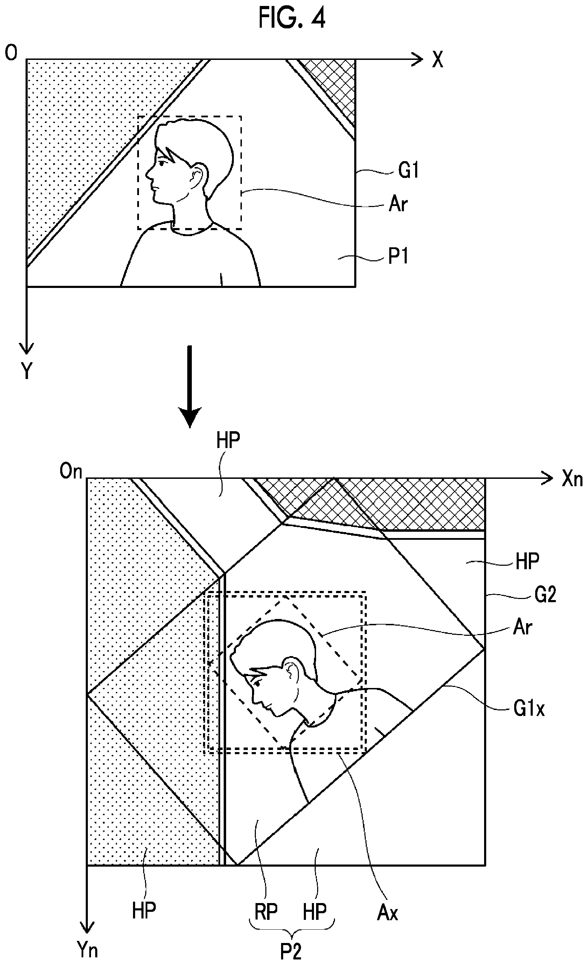

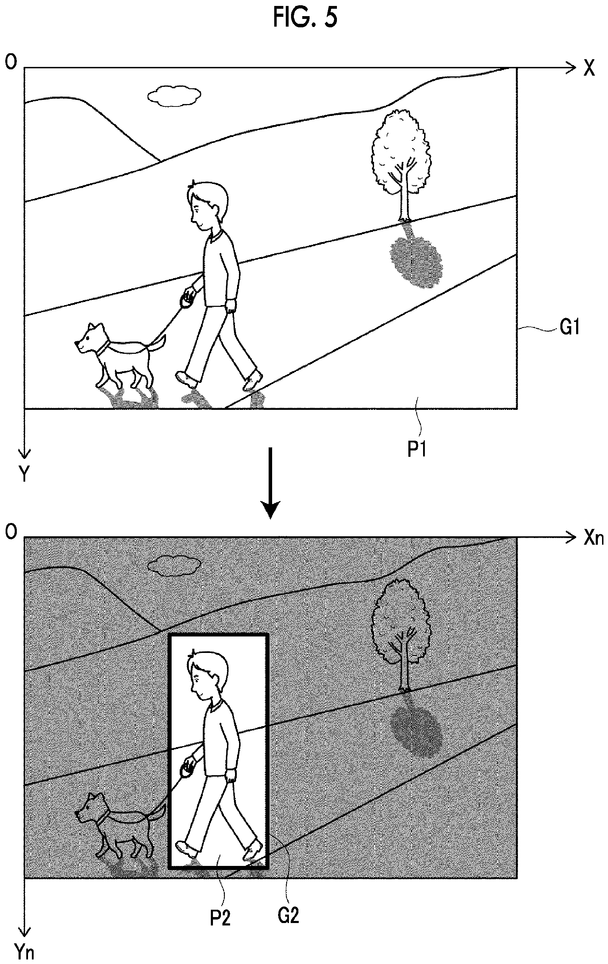

Meanwhile, for the image data, in some cases, the image information is converted by a well-known image editing method for the purpose of effectively using the image data. Specifically, in some cases, the image information of the image before conversion is converted into image information of an image with an angle of view changed from the angle of view before conversion. Here, the angle of view before conversion is referred to as a first angle of view G1, and the angle of view after conversion is referred to as a second angle of view G2 (see Figs. 4 and 5).

The first angle of view is an angle of view in which the angle of view during imaging has been reflected. The angle of view during imaging is determined according to, for example, the specifications of the camera and the holding state and inclination of the camera with respect to the horizontal direction during imaging. Further, the origin of a coordinate space defining the first angle of view may be set at a predetermined position of the first angle of view, for example, at one vertex in the first angle of view or the center of the first angle of view (that is, an intersection of diagonal lines).

A process of changing the first angle of view to the second angle of view includes a rotation process in affine transformation and a removal process of removing (trimming) a portion of the first angle of view.

The rotation process is a process of converting the image information of the image with the first angle of view G1 into the image information of the second angle of view G2 rotated from the first angle of view as illustrated in Fig. 4.

The removal process is a process of converting the image information of the image with the first angle of view G1 into the image information of the image with the second angle of view G2 that is narrower than the first angle of view as illustrated in Fig. 5.

The image after conversion illustrated in Fig. 4 and each of the rotation process and the removal process will be described in detail below.

In a case where the image information is converted, the position of the object region in the angle of view is changed. Therefore, in a case where the image data after conversion is used, it is necessary to consider the change in the position of the object region. In the present invention, in consideration of this point, a step for information related to the position of the object region in the changed angle of view (specifically, an output step or an update step which will be described below) is executed for the image data in which the image information has been converted. Therefore, it is possible to appropriately and correctly use the image data after conversion.

<<For Processing Device According to First Embodiment of Present Invention>>

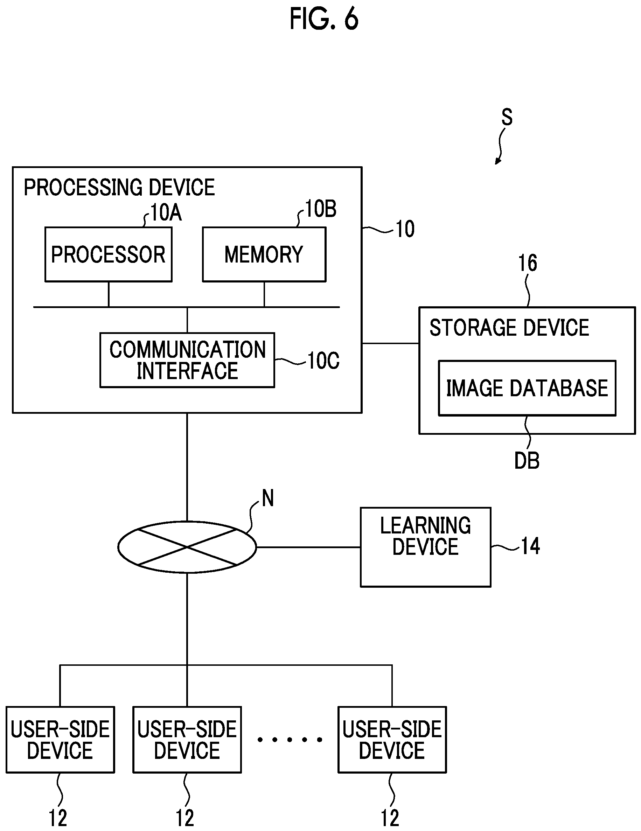

As illustrated in Fig. 6, a processing device (hereinafter, a processing device 10) according to the first embodiment of the present invention constitutes a processing system S together with the user-side device 12 and a learning device 14. The processing system S performs machine learning corresponding to a learning purpose designated by a user or the like and provides an inference model obtained as a learning result to the user. The user can determine or predict, for example, the type and state of the object in the image using the inference model.

The user-side device 12 is configured by, for example, a personal computer (PC) owned by the user, a communication terminal, or a camera having a communication function. The user-side device 12 provides the image data of a captured image to the processing device 10. Specifically, the user-side device 12 transmits the image data to the processing device 10 via a network N. The user-side device 12 provides the image data including the image information and the accessory information.

In addition, the accessory information may not be included in the image data at the time when the processing device 10 acquires the image data from the user-side device 12, but the processing device 10 may give the accessory information to the image data after acquiring the image data.

The processing device 10 is configured by a computer and is connected to the user-side device 12 and the learning device 14 to communicate therewith. The processing device 10 acquires the image data from the user-side device 12 and executes a series of data processing including the conversion of the image information (specifically, the change of the angle of view) on the image data.

In addition, the processing device 10 selects image data that satisfies a predetermined condition from a large number of image data items including image data before conversion and image data after conversion using annotation and creates training data for machine learning from the selected image data.

Further, the process of creating the training data from the selected image data may be executed by a device different from the processing device 10. Furthermore, the annotation (selection) of the image data may be performed in a stage before the image information is converted in the image data. In this case, for example, for the reason that the number of training data items is increased, the conversion of the image information (that is, the change of the angle of view) may be performed in the image data selected by the annotation.

In addition, the image data after conversion may be transmitted from the processing device 10 to the user-side device 12. In a case where the image data after conversion is received, the user-side device 12 displays the image based on the image information included in the image data, that is, the image with the second angle of view on a display of the user-side device 12.

Here, in a case where the second angle of view exceeds a size that can be displayed on the display of the user-side device 12, the processing device 10 sets a range, which is to be displayed on the display of the user-side device 12, in the second angle of view according to the size of the display. Similarly, in a case where an aspect ratio of the second angle of view is not matched with an aspect ratio of the display, the processing device 10 sets a range, which is to be displayed on the display of the user-side device 12, in the second angle of view according to the aspect ratio of the display.

Then, the processing device 10 adds information of the set display range to the accessory information of the image data transmitted to the user-side device 12.

The learning device 14 is configured by a computer and performs machine learning using the training data created by the processing device 10.

The machine learning is, for example, an analysis technique related to a technique and artificial intelligence that learns regularity and determination criteria from data and predicts and determines an unknown event on the basis of the regularity and the determination criteria. For example, machine learning is performed for the purpose of specifying a correspondence relationship between features of the image indicated by image data, which is a material of training data, and accessory information included in the image data. More specifically, an inference model is constructed which learns the correspondence relationship between the features of the object in the image and the type or the like of the object indicated by the accessory information and determines or predicts the type or the like of the object in the image from the learning result.

In addition, the inference model constructed by the machine learning is any mathematical model. For example, a neural network, a convolutional neural network, a recurrent neural network, attention, a transformer, a generative adversarial network, a deep learning neural network, a Boltzmann machine, matrix factorization, a factorization machine, an M-way factorization machine, a field-aware factorization machine, a field-aware neural factorization machine, a support vector machine, a Bayesian network, a decision tree, and a random forest can be used.

Further, in the configuration illustrated in Fig. 6, the processing device 10 and the learning device 14 are present independently of each other as separate devices. However, the present invention is not limited thereto. The devices may be integrated into a single device. In addition, the user-side device 12 may have some or all of the functions of the processing device 10.

An example of the configuration of the processing device 10 will be described. The processing device 10 is implemented by a processor and a program that can be executed by the processor and is configured by, for example, a general-purpose computer. As illustrated in Fig. 6, the computer constituting the processing device 10 comprises a processor 10A, a memory 10B, a communication interface 10C, and the like.

The processor 10A is configured by, for example, a central processing unit (CPU), a graphics processing unit (GPU), a digital signal processor (DSP), or a tensor processing unit (TPU).

The memory 10B is configured by, for example, a semiconductor memory, such as a read only memory (ROM) and a random access memory (RAM).

The communication interface 10C is configured by, for example, a network interface card or a communication interface board.

A program (hereinafter, an image processing program) for executing a series of processes on the image data is installed in the computer constituting the processing device 10. The image processing program is a program that causes the computer to execute the processing method according to the present invention. That is, the processor 10A reads out the image processing program and executes the image processing program such that the computer comprising the processor 10A functions as the processing device according to the present invention.

In addition, the image processing program may be read from a computer-readable recording medium and acquired. Alternatively, the image processing program may be received (downloaded) through a communication network, such as the Internet or an intranet, and acquired.

As illustrated in Fig. 6, the processing system S is provided with a storage device 16 that stores the image data acquired from the user-side device 12 by the processing device 10. A plurality of image data items are accumulated as an image database DB in the storage device 16, and the processing device 10 is configured to read out the image data stored in the storage device 16. In addition, the image data accumulated in the image database DB includes the image data in which the image information has been converted by the processing device 10.

Further, the image data accumulated in the storage device 16 may include image data acquired by reading a printed (developed) analog photograph with a scanner or the like and digitizing the read photograph. Furthermore, an acquisition source of the image data is not particularly limited and may be a device other than the user-side device 12, for example, another device (not illustrated) that is present on the network to which the processing device 10 is connected.

Moreover, the storage device 16 may be provided in the processing device 10 or may be provided in a third computer (for example, an external server) that can communicate with the processing device 10.

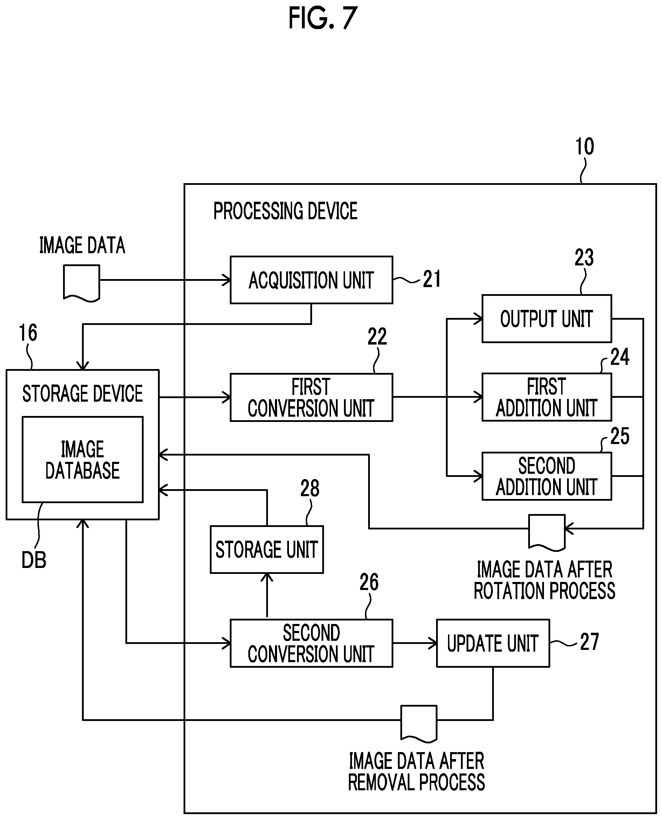

The configuration of the processing device 10 will be described again from a functional aspect. As illustrated in Fig. 7, the processing device 10 includes an acquisition unit 21, a first conversion unit 22, an output unit 23, a first addition unit 24, a second addition unit 25, a second conversion unit 26, an update unit 27, and a storage unit 28. These functional units are implemented by cooperation between a hardware device comprised in the computer constituting the processing device 10 and software including the above-described image processing program.

The acquisition unit 21 acquires the image data from the user-side device 12 or the like. The acquired image data is stored in the storage device 16 and is accumulated in the image database DB.

The first conversion unit 22 reads out the image data from the storage device 16 and executes the rotation process as a first conversion process on the image data. The amount of rotation, that is, a rotation angle from the first angle of view G1 to the second angle of view G2 in the rotation process is set within a rotation range that is greater than 0° and less than 360°. As illustrated in Fig. 4, the second angle of view G2 defined by the rotation process is defined as a range that surrounds a first angle of view G1x after rotation, specifically, a rectangular range that circumscribes the first angle of view G1x after rotation.

In addition, the rotation angle in the rotation process can be optionally determined within the above-described rotation range. For example, the rotation angle may be randomly set by the processing device 10. Alternatively, the user may designate the rotation angle through the user-side device 12. In Fig. 4, the rotation angle is 45°.

Further, in a case where the rotation angle satisfies a predetermined condition, specifically, in a case where the rotation angle is within a rotation range excluding 90°, 180°, and 270°, the size of the second angle of view is a range surrounding the first angle of view G1x. Therefore, the size of the second angle of view in this case is larger than the size of the first angle of view. In this case, as illustrated in Fig. 4, an image P2 with the second angle of view includes a rotated image RP obtained by rotating an image P 1 with the first angle of view and a complementary image HP adjacent to four sides of the rotated image RP.

The complementary image HP is a pseudo image that complements a portion other than the rotated image RP in the image P2 with the second angle of view and is, for example, an image filled with a single color or a plurality of colors or an image with a predetermined pattern. The color arrangement of the complementary image HP is not particularly limited. As illustrated in Fig. 4, the same color as that of pixels on a side (edge) which is adjacent to the complementary image HP among four sides of the rotated image RP may be set as the color of the complementary image HP.

Further, the aspect ratio of the second angle of view G2 may be different from the aspect ratio of the first angle of view depending on the rotation angle.

Then, the image data subjected to the rotation process is stored in the storage device 16 and is accumulated in the image database DB.

In a case where the rotation process is executed, the output unit 23 outputs new position information related to the position of the object region in the second angle of view G2. The "new position information" is, for example, position information related to the position of a region Ax after conversion in the second angle of view G2. Here, the position of the region Ax after conversion in the second angle of view is represented in a coordinate space that defines the second angle of view G2.

As illustrated in Fig. 4, in the second angle of view G2, the region Ax after conversion is a region (a region represented by a double broken line in Fig. 4) that is larger than an object region Ar (a region represented by a broken line in Fig. 4) in the first angle of view and that includes the object region Ar and is specifically a region that circumscribes the object region Ar. In addition, the region Ax after conversion is set by the output unit 23 in a case where the rotation process has been executed.

The new position information, that is, the position information related to the region Ax after conversion is output on the basis of the information related to the rotation from the first angle of view to the second angle of view (hereinafter, rotation information) and position information related to the position of the object region A3 in the first angle of view before the rotation process. Here, the position of the object region Ar in the first angle of view before the rotation process is represented in a coordinate space that defines the first angle of view G1 before the rotation process.

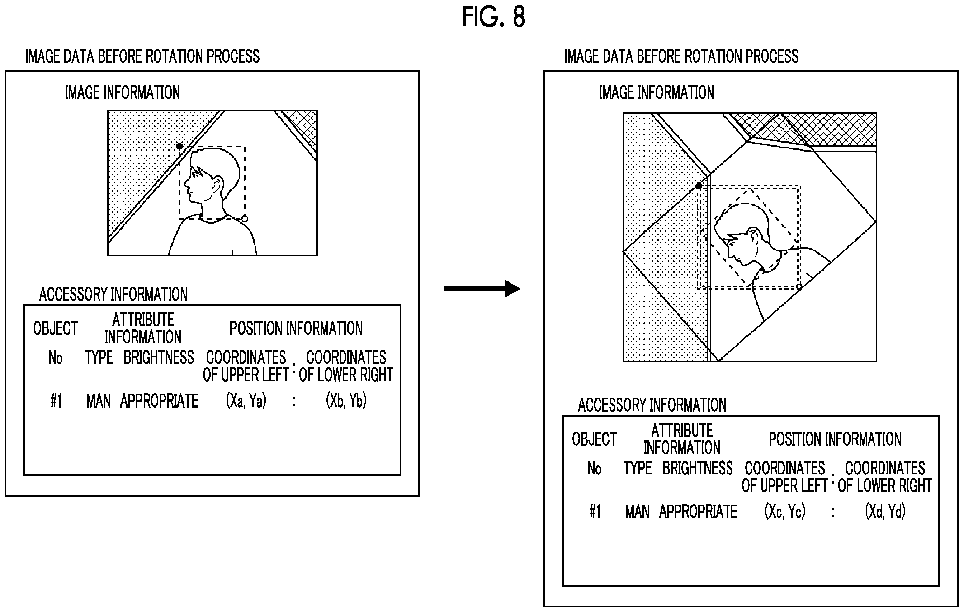

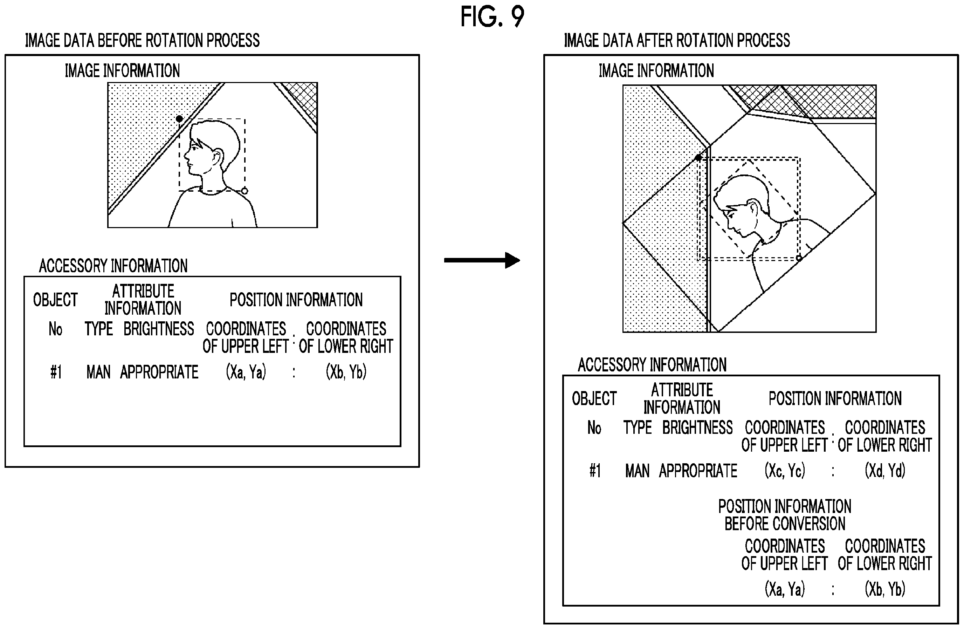

As an aspect of outputting the new position information, for example, as illustrated in Fig. 8, in the accessory information of the image data subjected to the rotation process, the position information of the object region is rewritten to the position information of the region Ax after conversion. Alternatively, as illustrated in Fig. 9, in addition to the position information of the region Ax after conversion, the position information of the object region Ar before the rotation process may be included in the accessory information of the image data subjected to the rotation process.

In addition, the image data subjected to the rotation process is image data including the image information of the image P2 with the second angle of view and is hereinafter referred to as image data after the rotation process.

Further, as described above, the image P2 with the second angle of view can be displayed on the display of the user-side device 12. Meanwhile, in a case where the rotation angle in the rotation process satisfies the predetermined condition, the second angle of view G2 is larger than the first angle of view G1. As a result, the second angle of view G2 may exceed the size that can be displayed on the user-side device 12. In this case, the output unit 23 may set a range to be displayed by the user-side device 12 in the second angle of view G2 and output information of the set display range together with the position information of the region Ax after conversion.

In a case where the rotation process has been executed, the first addition unit 24 adds information related to the rotation process to the accessory information included in the image data after the rotation process. The information related to the rotation process is information related to the rotation from the first angle of view to the second angle of view and is specifically, for example, information indicating a rotation angle, a rotation center, and an execution history of the rotation process.

In addition, the information related to the rotation process is not necessarily the same information as the rotation information referred to in a case where the output unit 23 outputs the new position information.

In a case where the rotation process is executed and the rotation angle satisfies the predetermined condition, the second addition unit 25 adds information related to the complementary image HP to the accessory information included in the image data after the rotation process. The information related to the complementary image HP includes, for example, information related to the position of a region of the complementary image HP in the second angle of view G2 and information indicating that the image located in the region is the complementary image HP.

The second conversion unit 26 reads out the image data from the storage device 16 and executes the removal process as a second conversion process on the image data. The degree of removal from the first angle of view G1 to the second angle of view G2 in the removal process is set within a range that is greater than 0 and less than 100 in a case where the number of pixels of the first angle of view is 100.

In the removal process, the second angle of view G2 is a rectangular region and is set, for example, such that a portion or all of at least one object (for example, the main object) included in the first angle of view G1 remains in the second angle of view G2. In other words, in the removal process, as illustrated in Fig. 5, in the first angle of view G1, a region outside the second angle of view G2 is removed.

The update unit 27 executes a first update process in a case where an object region including a target object in the first angle of view G1 has been removed at a predetermined ratio or more in the second angle of view G2 by the removal process. The target object is an object whose object region has been removed at a predetermined ratio or more in the second angle of view by the removal process among the objects included in the first angle of view. The first update process is a process of updating the accessory information included in the image data subjected to the removal process and is specifically a process of deleting information related to attributes of the target object in the accessory information.

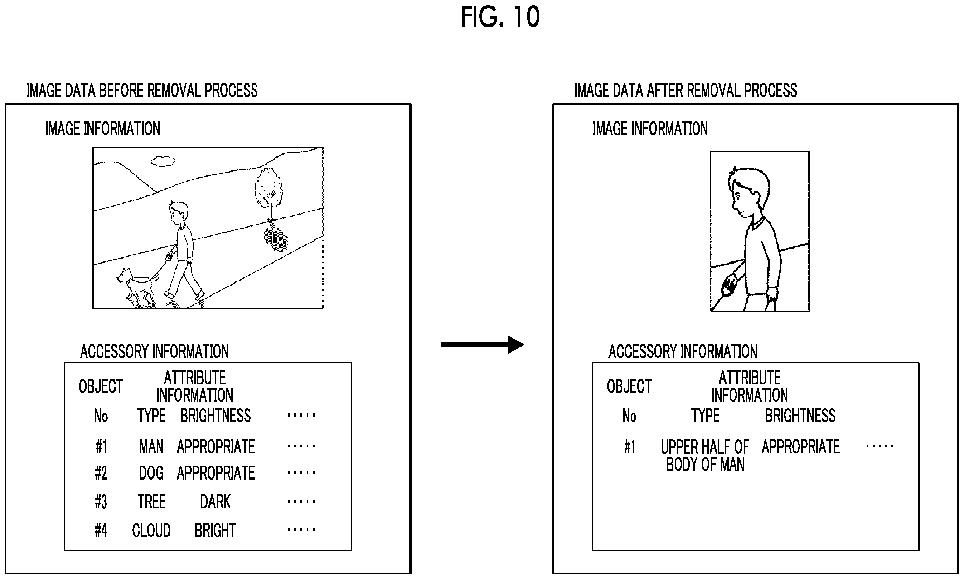

A case illustrated in Fig. 10 will be described as an example. It is assumed that the first angle of view G1 of the image data before the removal process includes four objects and the types (categories) of the objects are a "person", a "dog", a "tree", and a "cloud". Here, in a case where the object region of each of the "dog", the "tree", and the "cloud" is removed at a predetermined ratio or more in the second angle of view G2 by the removal process, the three objects of the "dog", the "tree", and the "cloud" correspond to the target objects. In this case, the first update process is executed. As a result, the attribute information of each of the three target objects is deleted as illustrated in Fig. 10.

In a case where the first angle of view G1 of the image data before the removal process includes a plurality of objects, the update unit 27 calculates the removal ratio in the second angle of view G1 for each object region using the following Expression (1).

$$\text{Removal ratio in the second angle of view} = (k1 - k2)/k1 \times 100 \quad \text{Expression (1)}$$

In Expression (1), k1 indicates the number of pixels of each object region in the first angle of view G1, and k2 indicates the number of pixels of each object region in the second angle of view G2. For example, in a case where the number of pixels of the object region of the "dog" in the first angle of view G1 is 2000 and the number of pixels of the object region of the "dog" in the second angle of view is removed up to 500 by the removal process, the removal ratio is 75 (= 1500/2000 × 100).

Further, the update unit 27 determines whether or not the calculated removal ratio is equal to or greater than a predetermined ratio for each object region and sets the object included in the object region, for which the removal ratio is equal to or greater than the predetermined ratio, as the target object. Here, the predetermined ratio which is a criterion for determining whether or not to correspond to the target object may be set according to the attributes (specifically, the type and the like) of the target object and may be different for each attribute. In this case, it is possible to appropriately determine whether or not to set the object as the target object (in other words, whether or not the object is to be subjected to the first update process) according to the attributes of the object.

Further, in a case where the target object is a person, the predetermined ratio may differ depending on the orientation of the face of the person. It is possible to appropriately determine whether or not to set the person that is an object as the target object (in other words, whether or not to set the person as the object to be subjected to the first update process) according to the orientation of the face of the person.

Then, in a case where the target object is present, the update unit 27 executes the first update process. In the first update process, as illustrated in Fig. 10, the attribute information of the target object is deleted from the accessory information included in the image data after the removal process. Here, the image data after the removal process is image data subjected to the removal process.

In addition, in some cases, a portion of the object in the first angle of view is extracted in the second angle of view by the removal process. For example, in the case illustrated in Fig. 10, the upper half of the body of an object "man" is extracted by the removal process. In a case where a portion of the object has been extracted by the removal process as described above, the update unit 27 may update the attribute information of the object from which a portion has been extracted to content ("the upper half of the body of the man" in Fig. 10) corresponding to the extracted portion as illustrated in Fig. 10.

In a case where the removal process has been executed, the storage unit 28 stores the image data before conversion in the storage device 16 and accumulates the image data before conversion in the image database DB. The image data before conversion is image data including the image information of the image P1 with the first angle of view before the removal process (before conversion) and the accessory information related to the position (specifically, the relative position) of the second angle of view G2 in the first angle of view G1.

Further, it is preferable that the image data before conversion is converted into data with a lower capacity by, for example, lowering the quality of the image P1 with the first angle of view and the converted data is stored in the storage device 16. In this case, it is possible to reduce a data storage capacity and to easily read the image data before conversion.

In addition, it is preferable that the image data before conversion is included in the image data after the removal process and then stored or is stored in the storage device 16 in association with the image data after the removal process. In this case, it is possible to easily ascertain which image data is the original data of the image data after the removal process.

<<For Processing Procedure of Image Data According to First Embodiment of Present Invention>>

Next, a processing flow of the image data using the processing device 10 according to the first embodiment of the present invention will be described. In the processing flow described below, the image data is processed using the processing method according to the present invention. That is, each step in the processing flow described below corresponds to a component of the processing method according to the present invention.

In addition, the flow of the process described below is only an example. Unnecessary steps may be deleted, new steps may be added, or an order in which the steps are executed may be changed, without departing from the gist of the present invention.

The processing flow is started, for example, by the reception of an execution request transmitted from the user-side device 12 by the processing device 10. In addition, in the processing flow, the processing device 10 acquires the image data from the user-side device 12 or the like and stores the acquired image data in the storage device 16. The image database DB is constructed by the accumulation of the image data in the storage device 16.

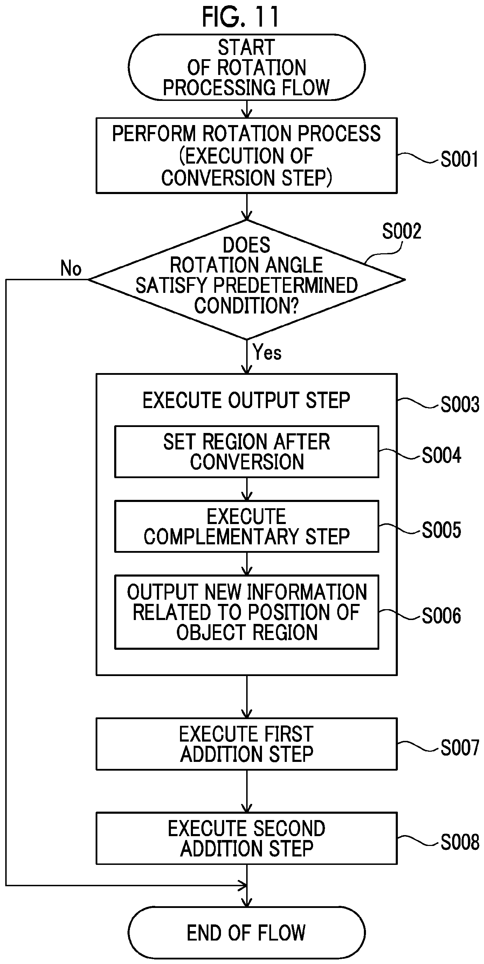

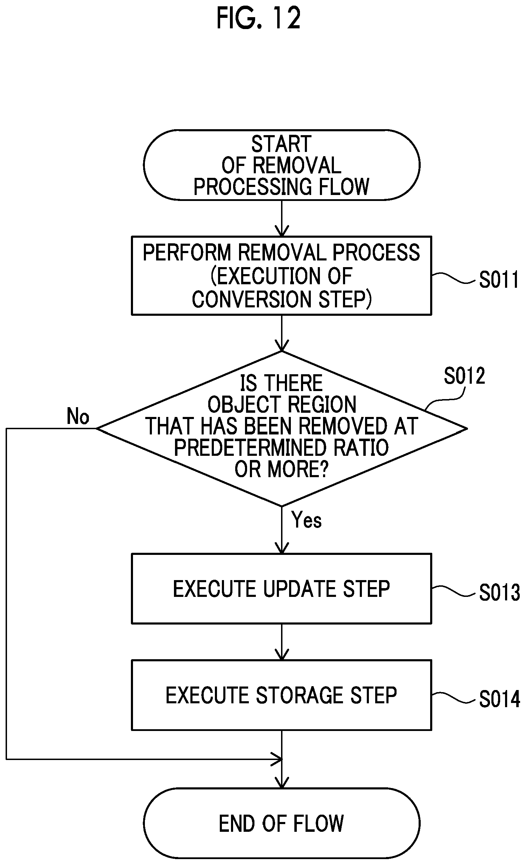

The processing flow includes a rotation processing flow illustrated in Fig. 11 and a removal processing flow illustrated in Fig. 12. The rotation processing flow is a flow in which the rotation process is executed to convert the image information. The removal processing flow is a flow in which the removal process is executed to convert the image information. Hereinafter, each processing flow will be described.

(Rotation Processing Flow)

Each step in the rotation processing flow is executed by the processor 10A of the processing device 10. The processor 10A reads out the image processing program and executes a series of data processing related to the rotation processing flow.

In the rotation processing flow, the processor 10A reads out the image data from the storage device 16 and executes the rotation process on the read-out image data (S001). Step S001 corresponds to a conversion step in the rotation processing flow. In Step S001, the image information included in the image data, that is, the image information of the image P1 with the first angle of view is converted into the image information of the image P2 with the second angle of view rotated from the first angle of view.

Then, the processor 10A determines whether or not the rotation angle in the rotation process satisfies a predetermined condition, specifically, whether the rotation angle is within a rotation range excluding 90°, 180°, and 270° in the rotation range that is greater than 0° and less than 360° (S002).

In a case where the rotation angle satisfies the predetermined condition, the processor 10A executes an output step (S003). In the output step, as illustrated in Fig. 11, the processor 10A sets the region Ax after conversion in the second angle of view G2 (S004). The region Ax after conversion is set on the basis of the position information of the object region in the first angle of view G1 before the rotation process and the information (rotation information) related to the rotation from the first angle of view G1 to the second angle of view G2 and circumscribes the object region Ar in the second angle of view G2 (see Fig. 4).

In the output step, the processor 10A executes a complementary step to make the complementary image HP, which is the pseudo image, adjacent to each of four sides of the rotated image RP obtained by rotating the image P1 with the first angle of view (S005). Then, an image obtained by complementing a portion other than the rotated image RP with the complementary image HP is generated as the image P2 with the second angle of view.

Further, in the output step, the processor 10A outputs new position information related to the position of the object region in the second angle of view G2 on the basis of the rotation information and the position information of the object region in the first angle of view before the rotation process (S006). Specifically, the processor 10A outputs the position information of the region Ax after conversion set in Step S004 as the new position information.

In addition, in a case where the new position information is output, the processor 10A may rewrite the position information of the object region included in the accessory information of the image data after the rotation process to the position information of the region Ax after conversion (see Fig. 8). Further, the position information of the region Ax after conversion may be stored in a data file different from the image data in association with the image data after the rotation process.

In a case where the new position information is output for the object region as described above, even though the position of the object region is changed with the change of the angle of view by the rotation process, it is possible to appropriately specify the changed position of the object region (specifically, the region Ax after conversion). Therefore, it is possible to accurately ascertain the correspondence relationship between the position of the object region and the attributes of the object included in the object region for the image data after the rotation process. As a result, in a case where machine learning is performed using the training data created from the image data after the rotation process, it is possible to obtain a learning result with high accuracy.

Further, the region Ax after conversion is set to be larger than the object region Ar in the first angle of view and to include the object region Ar in the second angle of view G2 (see Fig. 4). The region Ax after conversion includes the same object as that in the object region Ar included in the region Ax after conversion. Therefore, even in a case where the position of the object region is moved by the rotation process, it is possible to appropriately detect the object included in the object region.

Returning to the description of the rotation processing flow, in a case where the rotation process has been executed, the processor 10A executes a first addition step and a second addition step (S007 and S008). In the first addition step, the processor 10A adds information related to the rotation process to the accessory information of the image data after the rotation process.

In a case where the information related to the rotation process is added in the first addition step, it is possible to easily identify that the image data having the information added thereto is the image data after the rotation process. Therefore, for example, in a case where machine learning is performed using the training data created from the image data after the rotation process, it is possible to easily ascertain that the training data has been created from the image data after the rotation process. In addition, it is possible to specify a correspondence relationship between the rotation angle, the rotation center, and the like indicated by the information related to the rotation process and the accuracy of the machine learning using the training data created from the image data after the rotation process.

In the second addition step, the processor 10A adds information related to the complementary image HP to the additional information of the image data after the rotation process. In a case where the information related to the complementary image HP is added, it is possible to easily determine whether or not the image data is the image data of the image including the complementary image HP. As a result, in the selection (annotation) of the image data for creating the training data, it is possible to select the image data in consideration of the presence or absence of the complementary image HP.

Further, in a case where machine learning is performed using the training data created from the image data of the image including the complementary image HP, it is possible to specify whether the complementary image HP is present or absent and the position of the complementary image HP on the basis of the information related to the complementary image HP. Therefore, it is possible to avoid erroneous recognition of the complementary image HP as a correct image for learning.

The rotation processing flow is ended at the time when a series of Steps S001 to S008 described above is ended.

(Removal Processing Flow)

Each step in the removal processing flow is executed by the processor 10A. The processor 10A reads out the image processing program and executes a series of data processing related to the removal processing flow.

In the removal processing flow, the processor 10A reads out the image data from the storage device 16 and executes the removal process on the read-out image data (S011). Step S011 corresponds to a conversion step in the removal processing flow. In Step S011, the image information included in the image data, that is, the image information of the image with the first angle of view G1 is converted into the image information of the second angle of view G2 narrower than the first angle of view.

Then, the processor 10A determines whether or not the object region in the first angle of view G1 has been removed at a predetermined ratio or more in the second angle of view G2 by the removal process (that is, the conversion step) (S012). In a case where the first angle of view G1 includes a plurality of object regions, the processor 10A repeats Steps S012 and the subsequent steps on each object region.

In a case where the object region removed at the predetermined ratio or more by the removal process, that is, the object region of the target object is present, the processor 10A executes an update step (S013). In the update step, the processor 10A updates the accessory information of the image data after the removal process, specifically, deletes the attribute information of the target object in the accessory information (see Fig. 10).

Since the target object whose object region has been removed at the predetermined ratio or more is difficult to identify in the second angle of view G2 or is present outside the second angle of view G2, the attribute information is not necessary. Therefore, since the update step is executed to delete the attribute information of the target object from the accessory information as described above, it is possible to update the accessory information of the image data after the removal process to appropriate information according to the second angle of view G2. In addition, during the execution of machine learning using the training data created from the image data after the removal process, in a case where the attribute information of the target object is deleted, it is possible to reduce the influence of the target object on the learning result. As a result, it is possible to obtain the learning result with high accuracy.

Returning to the description of the removal processing flow, in a case where the processor 10A executes the removal process (that is, the conversion step), the processor 10A executes a storage step concomitantly with the removal process (S014). In the storage step, the processor 10A stores the image data before conversion in the storage device 16.

In a case where the image data before conversion is stored as described above, it is possible to perform machine learning using the training data created from the image data before conversion. In this machine learning, it is possible to specify the relationship between the first angle of view P1 and the second angle of view P2, specifically, a tendency related to the position of the region including the main object in the first angle of view P1. That is, it is possible to construct a model for detecting the main object in the image as the learning result.

In addition, from the viewpoint of a data storage capacity and a data reading speed, it is preferable that the image data before conversion is converted into data with a lower capacity and then stored in the storage device 16. Further, it is preferable that the image data before conversion is stored in the storage device 16 in association with the image data after the removal process. In addition, the low-capacity image data before conversion may be recorded as a thumbnail image together with the image data after conversion. In this case, it is more preferable that the accessory information of the image data after the removal process includes the position information of the object region in the image data before conversion, like the image data illustrated in Fig. 9.

The removal processing flow is ended at the time when a series of Steps S011 to S014 described above is ended.

<<Other Embodiments>>

The embodiment described above is a specific example given to describe the processing method, the processing device, and the program according to the present invention in an easy-to-understand manner and is only an example. Other embodiments can also be considered.

In the first embodiment, in the update step in a case where the removal process is executed, the attribute information of the target object, whose object region has been removed at a predetermined ratio or more, is deleted in the accessory information of the image data after the removal process. However, a method other than the above-described method may be used to update the accessory information in the update step.

An aspect in which the update step is executed by a method different from the above-described method will be described below as a second embodiment of the present invention. Further, hereinafter, in the second embodiment, configurations different from those in the first embodiment will be mainly described, and a description of configurations common to the first embodiment will be omitted.

In an update step according to the second embodiment, the processor 10A executes a third addition step instead of deleting the attribute information of the target object. The third addition step is a process of adding information (hereinafter, residual degree information) related to a residual degree of the object region of the target object in the second angle of view to the accessory information of the image data subjected to the removal process.

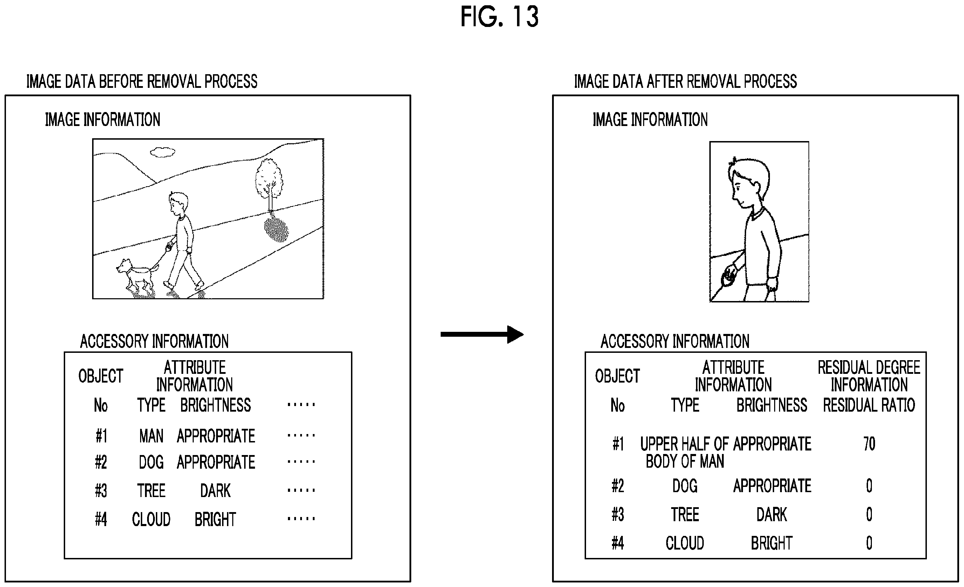

The residual degree information is, for example, information indicating a residual ratio illustrated in Fig. 13. The residual ratio is a ratio of the object region in the second angle of view to the object region in the first angle of view for each of the objects including the target object. Specifically, in a case where the above-described removal ratio is j, the residual ratio can be calculated by the following Expression (2). For example, a residual ratio of 100 means that the target object remains completely in the second angle of view. On the other hand, a residual ratio of 0 means that the target object has been completely deleted in the second angle of view.

$$\text{Residual ratio} = 100 - j \quad (2)$$

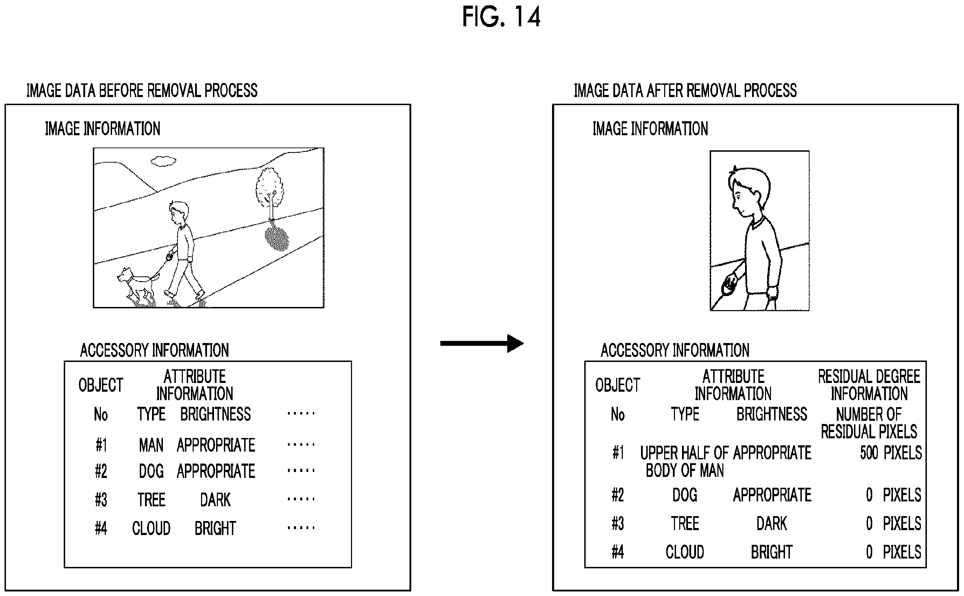

In addition, the residual degree information is not limited to the residual ratio and may be the number of pixels (the number of residual pixels) constituting the object region in the second angle of view G2 as illustrated in Fig. 14. In this case, residual degree information having a set of the number of residual pixels and the number of pixels of the object region (that is, the object region before the removal process) in the first angle of view G1 may be given. Alternatively, residual degree information having a set of the number of residual pixels and the number of pixels removed by the removal process may be given.

Further, information indicating whether or not the object region remains in the second angle of view G2, in other words, information indicating whether or not the object region is present outside the second angle of view G2 may be given as the residual degree information. Furthermore, in a case where the target object is a person, the residual degree information may include a ratio of the face of the person to the residual object region in the second angle of view G2.

As described above, since the residual degree information related to the object region of the target object is given to the accessory information of the image data after the removal process, it is possible to easily ascertain the degree to which the object region of the target object is removed by the removal process. In addition, it is possible to determine whether or not the image data after the removal process is appropriate to use with reference to the residual degree information.

Specifically, the image data after the removal process may be used to create the training data on condition that a numerical value (for example, the residual ratio or the number of residual pixels) indicated by the residual degree information is equal to or greater than a threshold value. The reason is that, as the numerical value is larger, it is possible to more easily identify the target object included in the object region. In view of this point, in a case where training data is created using the image data in which the numerical value has reached a predetermined reference (threshold value), the reliability (credibility) of the training data is improved. As a result, it is possible to perform machine learning with high accuracy.

Meanwhile, the image data after the removal process may be used to create the training data on condition that the residual ratio, the number of residual pixels, or the ratio of the face of the person to the object region indicated by the residual degree information is less than the threshold value. The reason is that, for example, in a case where the object is a person and data of an image in which the person is clearly shown is used without permission, portrait rights issues may arise. In view of this point, in a case where image data in which the numerical value has not reached the predetermined reference (threshold value) is selected, it is possible to avoid the problems related to the rights of the object.

As described above, the residual degree information is referred to in a case where image data in which the residual degree of the object region satisfies a setting condition (specifically, the condition in which the residual degree is greater than or less than the threshold value) is selected from the image database DB. Then, it is possible to select the image data suitable for use with reference to the residual degree information.

In addition, in the second embodiment, the attribute information of the object whose object region has been deleted at the predetermined ratio or more by the removal process, that is, the target object is not deleted and remains in the accessory information. Therefore, it is possible to use the attribute information of the target object in a case where machine learning is performed using the training data created from the image data after the removal process. This makes it possible to perform machine learning using the attribute information of the object outside the second angle of view G2 in addition to the attribute information of the object included in the second angle of view G2. As a result, for example, it is possible to perform the machine learning in consideration of the imaging location, scene, or the like of the original image indicated by the image data before the removal process, in other words, a background included in the image P1 with the first angle of view.

In addition, in the above-described embodiments, the image data in which the image information has been converted (that is, the image data subjected to the rotation process or the removal process) is used to create training data for machine learning. However, the image data may be used for purposes other than the creation of the training data.

Further, the processor of the processing device according to the present invention may be provided in each of the user-side device 12 and a server computer that can communicate with the user-side device 12. Furthermore, in a case where a plurality of processors are present, the plurality of processors may cooperate with each other.

The processor provided in the processing device according to the present invention includes various processors. The various processors include, for example, a CPU which is a general-purpose processor that executes software (program) to function as various processing units.

Moreover, the various processors include a programmable logic device (PLD) which is a processor whose circuit configuration can be changed after manufacturing, such as a field programmable gate array (FPGA).

Further, the various processors include, for example, a dedicated electric circuit which is a processor having a dedicated circuit configuration designed to execute a specific process, such as an application specific integrated circuit (ASIC).

Furthermore, one functional unit of the processing device according to the present invention may be configured by one of the various processors or may be configured by a combination of two or more processors of the same type or different types, for example, a combination of a plurality of FPGAs or a combination of an FPGA and a CPU.

In addition, a plurality of functional units of the processing device according to the present invention may be configured by one of the various processors, or two or more of the plurality of functional units may be configured by one processor.

Further, as in the above-described embodiment, one processor may be configured by a combination of one or more CPUs and software and may function as the plurality of functional units.

In addition, for example, an aspect may be adopted in which a processor that implements the functions of the entire system including a plurality of functional units of the processing device according to the present invention using one integrated circuit (IC) chip is used. A representative example of this aspect is a system on chip (SoC). Furthermore, a hardware configuration of the various processors described above may be an electric circuit (circuitry) in which circuit elements, such as semiconductor elements, are combined.

Explanation of References

10: processing device
10A: processor
10B: memory
10C: communication interface
12: user-side device
14: learning device
16: storage device
21: acquisition unit
22: first conversion unit
23: output unit
24: first addition unit
25: second addition unit
26: second conversion unit
27: update unit
28: storage unit
Ar: object region
Ax: region after conversion
G1: first angle of view
G1x: first angle of view after rotation
G2: second angle of view
DB: image database
HP: complementary image

N: network
P 1: image with first angle of view
P2: image with second angle of view
RP: rotated image
S: processing system

**Claims**

1.  A processing method for processing image data including image information of an image with a first angle of view including an object and accessory information given to the image, the processing method comprising:

    a conversion step of converting the image information of the image with the first angle of view into image information of an image with a second angle of view rotated from the first angle of view; and
    an output step of outputting new position information related to a position of a region of the object in the second angle of view on the basis of information related to a rotation from the first angle of view to the second angle of view and position information related to the position of the region of the object in the first angle of view in a case where the conversion step has been executed.

2.  The processing method according to claim 1,
    wherein the output step is executed in a case where a rotation angle from the first angle of view to the second angle of view satisfies a predetermined condition.

3.  The processing method according to claim 2,
    wherein, in the output step, in the second angle of view, a region after conversion that is larger than the region of the object in the first angle of view and that includes the region of the object is set, and position information related to the region after conversion in the second angle of view is output as the new position information.

4.  The processing method according to claim 2,
    wherein the predetermined condition is a condition in which the rotation angle is within a rotation range excluding 90°, 180°, and 270° in a rotation range that is greater than 0° and less than 360°.

5.  The processing method according to claim 1, further comprising:
    a first addition step of adding the information related to the rotation from the first angle of view to the second angle of view to the accessory information of the image data including the image information of the image with the second angle of view in a case where the conversion step has been executed.

6.  The processing method according to claim 1,

    wherein the conversion step includes a complementary step of complementing a portion other than a rotated image obtained by rotating the image with the first angle of view in the image with the second angle of view with a complementary image, and
    the processing method further comprises a second addition step of adding information related to the complementary image to the accessory information of the image data including the image information of the image with the second angle of view in a case where the conversion step has been executed.

7.  The processing method according to claim 1,
    wherein the image data is used to create training data used for machine learning.

8.  A processing device for processing image data including image information of an image with a first angle of view including an object and accessory information given to the image, the processing device being configured to execute:

    a conversion step of converting the image information of the image with the first angle of view into image information of an image with a second angle of view rotated from the first angle of view; and
    an output step of outputting new position information related to a position of a region of the object in the second angle of view on the basis of information related to a rotation from the first angle of view to the second angle of view and position information related to the position of the region of the object in the first angle of view in a case where the conversion step has been executed.

9. A program causing a computer to execute the processing method according to claim 1.

10. A processing method for processing image data including image information of an image with a first angle of view including an object and accessory information given to the image, the processing method comprising:

a conversion step of converting the image information of the image with the first angle of view into the image information of an image with a second angle of view narrower than the first angle of view; and
an update step of updating the accessory information in a case where an object region including a target object that is the object in the first angle of view has been removed at a predetermined ratio or more in the second angle of view by the conversion step.

11. The processing method according to claim 10,
wherein, in the update step, a process of deleting information related to an attribute of the target object in the accessory information or a process of adding information related to a residual degree of the object region in the second angle of view to the accessory information is executed.

12. The processing method according to claim 11,
wherein the information related to the residual degree of the object region in the second angle of view includes a residual ratio of the object region in the second angle of view to the object region in the first angle of view or the number of pixels constituting the object region in the second angle of view.

13. The processing method according to claim 12,
wherein the information related to the residual degree of the object region in the second angle of view is information that is referred to in a case where image data in which the residual degree satisfies a setting condition is selected from an image database in which a plurality of image data items are accumulated.

14. The processing method according to claim 10,
wherein the predetermined ratio is set according to an attribute of the target object.

15. The processing method according to claim 10,
wherein, in a case where the target object is a person, the predetermined ratio differs depending on an orientation of a face of the person.

16. The processing method according to claim 10,
wherein the object region is a region that is specified by coordinates of a plurality of points in the object region or a region that is specified by coordinates of a base point in the object region and a distance from the base point.

17. The processing method according to claim 10, further comprising:
a storage step of storing image data before conversion that includes the image information of the image with the first angle of view before the conversion and the accessory information related to a position of the second angle of view in the first angle of view in a case where the conversion step has been executed.

18. A processing device for processing image data including image information of an image with a first angle of view including an object and accessory information given to the image, the processing device being configured to execute:

a conversion step of converting the image information of the image with the first angle of view into the image information of an image with a second angle of view narrower than the first angle of view; and
an update step of updating the accessory information in a case where an object region including a target object that is the object in the first angle of view has been removed at a predetermined ratio or more in the second angle of view by the conversion step.

19. A program causing a computer to execute the processing method according to claim 10.

# FIG. 1

IMAGE DATA

IMAGE INFORMATION

ACCESSORY INFORMATION

| OBJECT | ATTRIBUTE INFORMATION | | POSITION INFORMATION | | |
|---|---|---|---|---|---|
| No | TYPE | BRIGHTNESS | COORDINATES OF UPPER LEFT | : | COORDINATES OF LOWER RIGHT |
| #1 | MAN | APPROPRIATE | $(X_{11}, Y_{11})$ | : | $(X_{12}, Y_{12})$ |
| #2 | DOG | APPROPRIATE | $(X_{21}, Y_{21})$ | : | $(X_{22}, Y_{22})$ |
| #3 | TREE | DARK | $(X_{31}, Y_{31})$ | : | $(X_{32}, Y_{32})$ |
| #4 | CLOUD | BRIGHT | $(X_{41}, Y_{41})$ | : | $(X_{42}, Y_{42})$ |

# FIG. 2

# FIG. 3

# FIG. 4

# FIG. 5

# FIG. 6

# FIG. 7

PROCESSING DEVICE — 10

IMAGE DATA

ACQUISITION UNIT — 21

OUTPUT UNIT — 23

STORAGE DEVICE — 16

FIRST CONVERSION UNIT — 22

FIRST ADDITION UNIT — 24

SECOND ADDITION UNIT — 25

IMAGE DATABASE

DB

IMAGE DATA AFTER ROTATION PROCESS

STORAGE UNIT — 28

SECOND CONVERSION UNIT — 26

UPDATE UNIT — 27

IMAGE DATA AFTER REMOVAL PROCESS

# FIG. 8

IMAGE DATA BEFORE ROTATION PROCESS

IMAGE INFORMATION

ACCESSORY INFORMATION

| OBJECT No | ATTRIBUTE INFORMATION | | POSITION INFORMATION | |
|---|---|---|---|---|
| | TYPE | BRIGHTNESS | COORDINATES OF UPPER LEFT | COORDINATES OF LOWER RIGHT |
| #1 | MAN | APPROPRIATE | (Xa, Ya) : | (Xb, Yb) |

→

IMAGE DATA BEFORE ROTATION PROCESS

IMAGE INFORMATION

ACCESSORY INFORMATION

| OBJECT No | ATTRIBUTE INFORMATION | | POSITION INFORMATION | |
|---|---|---|---|---|
| | TYPE | BRIGHTNESS | COORDINATES OF UPPER LEFT | COORDINATES OF LOWER RIGHT |
| #1 | MAN | APPROPRIATE | (Xc, Yc) : | (Xd, Yd) |

EP 4 428 804 A1

# FIG. 9

**IMAGE DATA BEFORE ROTATION PROCESS**

IMAGE INFORMATION

ACCESSORY INFORMATION

| OBJECT No | ATTRIBUTE INFORMATION | | POSITION INFORMATION | |
|---|---|---|---|---|
| | TYPE | BRIGHTNESS | COORDINATES OF UPPER LEFT | COORDINATES OF LOWER RIGHT |
| #1 | MAN | APPROPRIATE | (Xa, Ya) : | (Xb, Yb) |

→

**IMAGE DATA AFTER ROTATION PROCESS**

IMAGE INFORMATION

ACCESSORY INFORMATION

| OBJECT No | ATTRIBUTE INFORMATION | | POSITION INFORMATION | |
|---|---|---|---|---|
| | TYPE | BRIGHTNESS | COORDINATES OF UPPER LEFT | COORDINATES OF LOWER RIGHT |
| #1 | MAN | APPROPRIATE | (Xc, Yc) : | (Xd, Yd) |

POSITION INFORMATION BEFORE CONVERSION

| COORDINATES OF UPPER LEFT | COORDINATES OF LOWER RIGHT |
|---|---|
| (Xa, Ya) : | (Xb, Yb) |

EP 4 428 804 A1

# FIG. 10

IMAGE DATA BEFORE REMOVAL PROCESS

IMAGE INFORMATION

ACCESSORY INFORMATION

| OBJECT | ATTRIBUTE INFORMATION | | |
|--------|------|-----------|-----|
| No | TYPE | BRIGHTNESS | ····· |
| #1 | MAN | APPROPRIATE | ····· |
| #2 | DOG | APPROPRIATE | ····· |
| #3 | TREE | DARK | ····· |
| #4 | CLOUD | BRIGHT | ····· |

→

IMAGE DATA AFTER REMOVAL PROCESS

IMAGE INFORMATION

ACCESSORY INFORMATION

| OBJECT | ATTRIBUTE INFORMATION | | |
|--------|------|-----------|-----|
| No | TYPE | BRIGHTNESS | |
| #1 | UPPER HALF OF BODY OF MAN | APPROPRIATE | ····· |

## FIG. 11

```
    ┌─────────────────────┐
    │        START        │
    │     OF ROTATION     │
    │   PROCESSING FLOW   │
    └─────────────────────┘
              │
    ┌─────────────────────┐
    │ PERFORM ROTATION    │
    │ PROCESS             │──── S001
    │ (EXECUTION OF       │
    │ CONVERSION STEP)    │
    └─────────────────────┘
              │
          ╱───────╲
   No    ╱  DOES    ╲        S002
 ◄──────╱  ROTATION  ╲
        ╲ ANGLE SATISFY PREDETERMINED ╱
         ╲ CONDITION? ╱
          ╲─────────╱
              │ Yes
    ┌─────────────────────────┐
    │  EXECUTE OUTPUT STEP    │──── S003
    │ ┌─────────────────────┐ │
    │ │ SET REGION AFTER    │ │──── S004
    │ │ CONVERSION          │ │
    │ └─────────────────────┘ │
    │ ┌─────────────────────┐ │
    │ │ EXECUTE             │ │──── S005
    │ │ COMPLEMENTARY STEP  │ │
    │ └─────────────────────┘ │
    │ ┌─────────────────────┐ │
    │ │ OUTPUT NEW          │ │
    │ │ INFORMATION RELATED │ │──── S006
    │ │ TO POSITION OF      │ │
    │ │ OBJECT REGION       │ │
    │ └─────────────────────┘ │
    └─────────────────────────┘
              │
    ┌─────────────────────┐
    │ EXECUTE FIRST       │──── S007
    │ ADDITION STEP       │
    └─────────────────────┘
              │
    ┌─────────────────────┐
    │ EXECUTE SECOND      │──── S008
    │ ADDITION STEP       │
    └─────────────────────┘
              │
    ┌─────────────────────┐
    │    END OF FLOW      │
    └─────────────────────┘
```

# FIG. 12

START
OF REMOVAL
PROCESSING FLOW

PERFORM REMOVAL PROCESS
(EXECUTION OF
CONVERSION STEP) ⟶ S011

IS THERE
OBJECT REGION
THAT HAS BEEN REMOVED AT
PREDETERMINED RATIO
OR MORE? — S012

No

Yes

EXECUTE UPDATE STEP ⟶ S013

EXECUTE STORAGE STEP ⟶ S014

END OF FLOW

## FIG. 13

IMAGE DATA BEFORE REMOVAL PROCESS

IMAGE INFORMATION

ACCESSORY INFORMATION

| OBJECT No | ATTRIBUTE INFORMATION | | |
|---|---|---|---|
| | TYPE | BRIGHTNESS | ····· |
| #1 | MAN | APPROPRIATE | ····· |
| #2 | DOG | APPROPRIATE | ····· |
| #3 | TREE | DARK | ····· |
| #4 | CLOUD | BRIGHT | ····· |

→

IMAGE DATA AFTER REMOVAL PROCESS

IMAGE INFORMATION

ACCESSORY INFORMATION

| OBJECT No | ATTRIBUTE INFORMATION | | RESIDUAL DEGREE INFORMATION |
|---|---|---|---|
| | TYPE | BRIGHTNESS | RESIDUAL RATIO |
| #1 | UPPER HALF OF BODY OF MAN | APPROPRIATE | 70 |
| #2 | DOG | APPROPRIATE | 0 |
| #3 | TREE | DARK | 0 |
| #4 | CLOUD | BRIGHT | 0 |

# FIG. 14

**IMAGE DATA BEFORE REMOVAL PROCESS**

IMAGE INFORMATION

ACCESSORY INFORMATION

| OBJECT No | ATTRIBUTE INFORMATION | | |
|---|---|---|---|
| | TYPE | BRIGHTNESS | ····· |
| #1 | MAN | APPROPRIATE | ····· |
| #2 | DOG | APPROPRIATE | ····· |
| #3 | TREE | DARK | ····· |
| #4 | CLOUD | BRIGHT | ····· |

→

**IMAGE DATA AFTER REMOVAL PROCESS**

IMAGE INFORMATION

ACCESSORY INFORMATION

| OBJECT No | ATTRIBUTE INFORMATION | | RESIDUAL DEGREE INFORMATION |
|---|---|---|---|
| | TYPE | BRIGHTNESS | NUMBER OF RESIDUAL PIXELS |
| #1 | UPPER HALF OF BODY OF MAN | APPROPRIATE | 500 PIXELS |
| #2 | DOG | APPROPRIATE | 0 PIXELS |
| #3 | TREE | DARK | 0 PIXELS |
| #4 | CLOUD | BRIGHT | 0 PIXELS |

## INTERNATIONAL SEARCH REPORT

| International application No. |
|---|
| **PCT/JP2022/033508** |

### A. CLASSIFICATION OF SUBJECT MATTER

*G06T 3/00*(2006.01)i; *G06T 7/00*(2017.01)i; *G06V 10/774*(2022.01)i
FI:    G06T3/00 715; G06T7/00 350B; G06V10/774

According to International Patent Classification (IPC) or to both national classification and IPC

### B. FIELDS SEARCHED

Minimum documentation searched (classification system followed by classification symbols)

G06T3/00; G06T7/00; G06V10/774

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0142856 A (KOREA ELECTRONICS TECHNOLOGY INSTITUTE) 30 December 2019 (2019-12-30) paragraphs [0028]-[0063], fig. 1-7 | 1-5, 7-9 |
| A | paragraphs [0028]-[0063], fig. 1-7 | 6 |
| A | CN 111062237 A (SENSETIME INTERNATIONAL PTE LTD.) 24 April 2020 (2020-04-24) paragraph [0099] | 10-19 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/033508**

| Patent document cited in search report | | | Publication date (day/month/year) | Patent family member(s) | | | Publication date (day/month/year) |
|---|---|---|---|---|---|---|---|
| KR | 10-2019-0142856 | A | 30 December 2019 | (Family: none) | | | |
| CN | 111062237 | A | 24 April 2020 | JP | 2022-505995 | A | |
| | | | | paragraph [0082] | | | |
| | | | | US | 2021/0073578 | A1 | |
| | | | | WO | 2021/044203 | A1 | |
| | | | | KR | 10-2021-0030245 | A | |

Form PCT/ISA/210 (patent family annex) (January 2015)

**REFERENCES CITED IN THE DESCRIPTION**

**Patent documents cited in the description**

- JP 2018018384 A